# EUROPEAN PATENT SPECIFICATION

(11) **EP 3 964 044 B1**
(45) Date of publication and mention of the grant of the patent: **25.02.2026**
(21) Application number: 20831870.9
(22) Date of filing: 18.05.2020
(51) Int. Cl.: A01D 34/13, A01D 34/37, A01D 34/90, A01D 34/10

(54) **HANDHELD WORKING MACHINE WITH RECIPROCATING CUTTING BLADES**
HANDGEFÜHRTE ARBEITSMASCHINE MIT HIN- UND HERGEHENDEM SCHNEIDMESSER
MACHINE DE TRAVAIL PORTATIVE À LAME DE COUPE À VA-ET-VIENT

(30) Priority: 28.06.2019 JP 2019121833
(43) Date of publication of application: 09.03.2022
(73) Proprietor: Yamabiko Corporation, Ohme-shi Tokyo 198-8760 (JP)
(72) Inventor: SHIMIZU, Kunio, Ohme-shi, Tokyo 198-8760 (JP); KODAMA, Hisao, Ohme-shi, Tokyo 198-8760 (JP); TATSUMI, Yuji, Ohme-shi, Tokyo 198-8760 (JP)
(74) Representative: Canzler & Bergmeier Patentanwälte Partnerschaft mbB
(86) International application number: PCT/JP2020/019668
(87) International publication number: WO 2020/261811

(56) References cited:
- EP-A1- 2 995 186
- DE-T2- 69 411 313
- JP-A- 2009 072 149
- JP-A- 2013 521 136
- JP-A- 2014 147 354
- JP-A- 2016 049 082
- US-A- 1 901 327

## Description

### Technical field

The present invention relates to a handheld working machine with reciprocating cutting blades, which is equipped with a reciprocating cutting blade apparatus mounted to the top end of its operating rod.

### Background art

As a handheld working machine for cutting or clipping branches and leaves, there has been generally known a hedge trimmer equipped with a reciprocating cutting blade apparatus having reciprocating cutting blades, like a hair clipper. Meanwhile, as a working machine for mowing on the ground, there has been generally known a brush cutter including a rotary cutter or a nylon cutter.

The handheld working machine for cutting branches and grass is required to produce little scattering substances during the work, in order to ensure the safety of the worker and the surrounding of the worker, or to prevent the damage of other people's properties near the working site. The amount of scattering substances produced by the reciprocating cutting blades during the work is less than those of the rotary blade and the nylon cutter which rotate at a high speed. There has been proposed a working machine for mowing on the ground with this advantage of the reciprocating cutting blades, which is equipped with a reciprocating cutting blade apparatus mounted to the top end of a handheld operating rod (see Japanese Patent Application Laid-Open No. 2016-49082). DE 694 11 313 T2, which discloses the features of the preamble of claim 1, describes another handheld working machine with reciprocating cutting blades. EP 2 995 186 A1 discloses a backpack type working machine, where a motor is installed in a frame for backpack, wherein the power of the motor is transmitted to a working part provided in the front end part of an operation part through a flexible shaft.

As described above, the conventional working machine is equipped with the reciprocating cutting blade apparatus mounted to the top end of its operating rod, and the reciprocating cutting blade apparatus includes cutting blades extending in the direction intersecting the longitudinal direction of the operating rod. That is, the reciprocating cutting blade apparatus is provided at the top end of the operating rod to form a T-shape. A drive source such as an engine and a motor is provided at the base end of the operating rod, and a drive force is transmitted to a power train in a transmission case of the reciprocating cutting blade apparatus via a drive shaft provided in the operating rod. The power train in the transmission case converts the rotation of the drive shaft to reciprocating motion to operate the reciprocating cutting blades coupled to the power train.

### Summary of Invention

### Technical Problem

According to the above-described working machine, the worker holds an operating handle provided at the base end of the operating rod by the hand to keep the reciprocating cutting blade apparatus mounted to the top end of the operating rod near the ground while the operating rod faces forward, and drives the reciprocating cutting blade apparatus, moving forward, to perform brush cutting with an effective width. The effective width is the width of the reciprocating cutting blades in the longitudinal direction. This handheld working machine with reciprocating cutting blades can reduce the scattering substances during the work and perform the work in one process with a wider effective width without shaking the operating rod from side to side. Consequently, it is possible to provide good workability and improve the efficiency of the work.

However, when this handheld working machine with reciprocating cutting blades performs brush cutting in a place where grass has grown thickly, mown grass falls over the reciprocating cutting blade apparatus. By this means, as the brush cutting is progressed, the mown grass is piled on the reciprocating cutting blade apparatus extending from side to side, and therefore to tend to form stack of grass on the reciprocating cutting blade apparatus. When the work continues with the stack of grass, the weight of the top end of the working machine is increasing, and the increase in the weight imposes a burden on the worker with increased work intensity, and therefore to deprive the worker of comfort during the work. In addition, when the stack of grass protrudes in front of the reciprocating cutting blade apparatus, the stack of grass is placed on unmown grass to hinder the mowing, and this may cause the grass not to be mown but to remain. Consequently, a problem of reducing the accuracy of the work occurs.

The present invention is proposed to address the problem, and it is therefore an object of the invention to provide a handheld working machine equipped with a reciprocating cutting blade apparatus mounted to the top end of its operating rod to form a T-shape. By this means, it is possible to continue the work without deteriorating the workability and reducing the accuracy of the work. To be more specific, it is possible to readily remove the stack of grass on the reciprocating cutting blade apparatus during the work, and therefore to continue the work with free from the stack of grass.

### Solution to Problem

To solve the above-described problem, the present invention provides a handheld working machine with reciprocating cutting blades according to claim 1.

### Advantageous effect

According to the invention, when the stack of mown grass is formed on the reciprocating cutting blade apparatus mounted to the top end of the operating rod to form a T-shape, the machine body is turned around a fulcrum which is one of the right and left ends of the reciprocating cutting blade apparatus to raise the reciprocating cutting blade apparatus. By this means, it is possible to readily remove the stack of grass.

In this case, the position of the battery having a relatively heavy weight is set such that the center of gravity of the machine body approaches the pivot axes of the turning when the machine body is turned as described above. Consequently, it is possible to reduce the load when the machine body is turned. By this means, it is possible to readily remove the stack of grass on the reciprocating cutting blade apparatus during the work, and therefore to continue the work with free from the stack of grass. Consequently, it is possible to continue the brush cutting without deteriorating the workability and reducing the accuracy of the work.

### Brief Description of Drawings

Fig. 1 illustrates the whole configuration of a handheld working machine with reciprocating cutting blades according to an embodiment of the invention;
Fig. 2 is a plan view illustrating pivot axes for turning the handheld working machine around a fulcrum which is the right or left end of a reciprocating cutting blade apparatus;
Fig. 3 is a side view illustrating the pivot axes for turning the handheld working machine around a fulcrum which is the right or left end of the reciprocating cutting blade apparatus; and
Fig. 4A illustrates the mounting position of a battery of a drive unit when the battery is mounted on the bottom surface of a motor;
Fig. 4B illustrates the mounting position of the battery of the drive unit when the battery is mounted on the back surface of the motor; and
Fig. 4C illustrates a case where the battery is not disposed.

### Description of Embodiments

Hereinafter, an embodiment of the present invention will be described with reference to the drawings. The same reference numbers in the different drawings indicate the same functional parts, and therefore repeated description for each of the drawings is omitted.

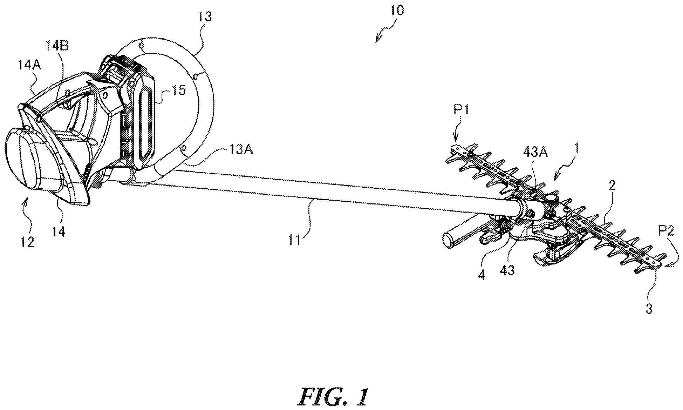

As illustrated in Fig. 1, a handheld working machine with reciprocating cutting blades (hereinafter simply referred to as "working machine") 10 according to an embodiment of the invention includes an operating rod 11, and a reciprocating cutting blade apparatus 1 is mounted to the top end of the operating rod 11.

The reciprocating cutting blade apparatus 1 incudes cutting blades 2 and a support member 3 configured to reciprocably support the cutting blades 2. The support member 3 is attached to a transmission case 4. The transmission case 4 includes a power train to which a drive force is transmitted from a drive shaft in the operating rod 11. The power train is configured to convert the rotation of the drive shaft to reciprocating motion. The cutting blades 2 coupled to the power train are reciprocated by the drive force of the drive shaft along the longitudinal direction of the cutting blades 2.

The top end of the operating rod 11 is mounted to an operating rod mount 43 provided on the transmission case 4. The operating rod mount 43 is provided on the transmission case 4 via an angle adjustment mechanism 43A. This angle adjustment mechanism 43A can adjust the rising angle of the operating rod 11 from the working surface of the cutting blades 2.

In addition, a drive unit 12 configured to drive the drive shaft is provided at the base end of the operating rod 11, and an operating handle 13 is provided in the base end side of the operating rod 11. The operating handle 13 includes a grip 13A above the operating rod 11.

The drive unit 12 is configured to drive the cutting blades 2 of the reciprocating cutting blade apparatus 1 via the drive shaft in the operating rod 11 as described above, and includes a housing 14 to accommodate a motor disposed approximately coaxially with the operating rod 11. A rear handle 14A including an operating switch 14B configured to turn on and off the reciprocating cutting blade apparatus 1 is provided in the housing 14. A battery 15 configured to supply electric power to the motor in the housing 14 is externally attached to the housing 14. With the embodiment of the invention, the battery 15 is mounted to the working machine 10 at a position in front of the housing 14, that is, a position between the motor and the operating handle 13 above the operating rod 11.

This working machine 10 is an electric brush cutter equipped with the reciprocating cutting blade apparatus 1. The longitudinal direction of the cutting blades 2 intersects the longitudinal direction of the operating rod 11, and therefore the reciprocating cutting blade apparatus 1 is provided at the top end of the operating rod 11 to form a T-shape. This working machine 10 performs brush cutting by driving the reciprocating cutting blade apparatus 1 to move the reciprocating cutting blade apparatus 1 along the ground while the worker holds the operating handle 13 and the rear handle 14A of the housing 14 by the hands to keep a predetermined rising angle of the operating rod 11 from the ground.

With this working machine 10, the width of the cutting blades 2 of the reciprocating cutting blade apparatus 1 in the longitudinal direction is the effective width without shaking the operating rod 11 from side to side. Accordingly, the worker can perform the brush cutting with the effective width by simply pushing the operating rod 11 forward. Therefore, it is possible to perform the brush cutting by the reciprocating cutting blade apparatus 1 speedily moving forward, and consequently to improve the efficiency of the brush cutting. Moreover, the reciprocating cutting blades are used to perform the brush cutting, and therefore it is possible to reduce the scattering substances during the work. By this means, it is possible to ensure the safety of the worker and the surrounding of the worker, and to perform the brush cutting without damaging other people's properties near the working site.

As the brush cutting is progressed by the working machine 10, the mown grass falling over the reciprocating cutting blade apparatus 1 may form the stack of grass on the reciprocating cutting blade apparatus 1 extending from side to side. In this case, one of left and right ends P1 and P2 of the reciprocating cutting blade apparatus 1 is grounded, and the machine body of the working machine 10 is turned around a fulcrum which is the grounded end to raise the reciprocating cutting blade apparatus 1, and then the grass piled on the reciprocating cutting blade apparatus 1 is thrown out to the side.

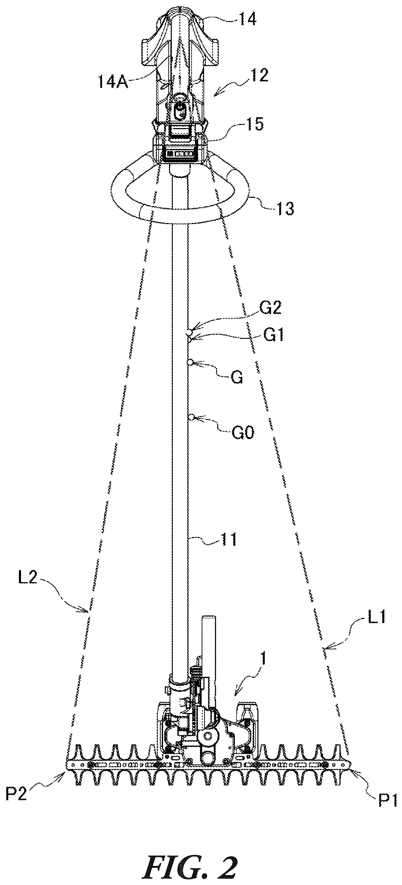

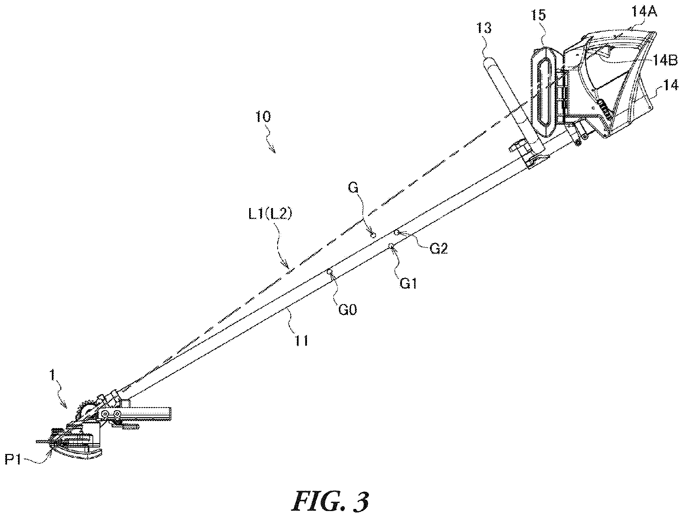

As illustrated in Figs. 2 and 3, pivot axes L1 and L2 for the turning of the machine body are straight lines extending from the left and right ends P1 and P2 to the gripping position (approximately center position) of the rear handle 14A of the housing 14 (here, L1 is a pivot axis for the turning around the left end P1 as the fulcrum, and L2 is a pivot axis for the turning around the right end P2 as the fulcrum).

Here, when the worker turns the machine body in this way, the moment of the weight is reduced as the centroid position of the working machine 10 approaches the pivot axes L1 and L2, and therefore the load on the worker for the turning is reduced. The centroid position of the working machine 10 is determined by the balance between the reciprocating cutting blade apparatus 1 and the drive unit 12 in weight. Here, it is possible to change the centroid position of the working machine 10 by changing the mounting position of the battery 15 which accounts for a relatively high weight ratio in the drive unit 12. The position of the battery 15 in the drive unit 12 of the working machine 10 is set such that center of gravity G of the machine body having the battery 15 approaches the above-described pivot axes L1 and L2.

Figs. 2 and 3 illustrate the relationship between the center of gravity G of the working machine 10 and the pivot axes L1 and L2 when the battery 15 is disposed in front of the housing 14, that is, disposed between the motor and the operating handle 13 above the operating rod 11, as the embodiment of the invention.

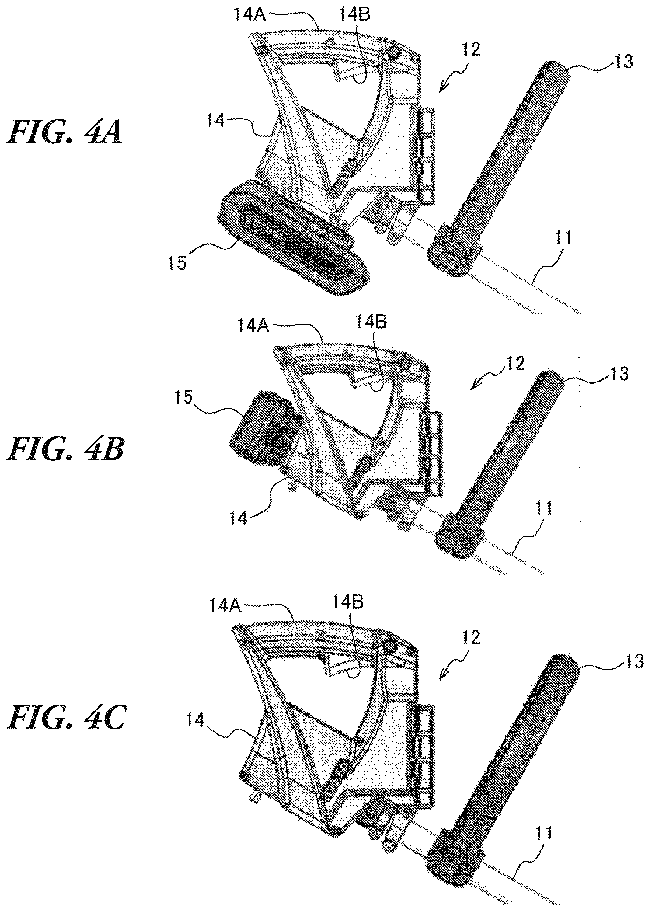

In addition, Figs. 2 and 3 illustrate the relationship between the center of gravity of the working machine 10 and the pivot axes L1 and L2 when the mounting position of the battery 15 is changed. In Figs. 2 and 3, center of gravity G1 indicates a position where the battery 15 is mounted to the bottom surface of the housing 14 (the bottom surface of the motor) as illustrated in Fig. 4A; and center of gravity G2 indicates a position where the battery 15 is mounted to the back surface of the housing 14 (the back surface of the motor) as illustrated in Fig. 4B. Moreover, center of gravity G0 indicates a position where the battery 15 is removed from the housing 14 as illustrated in Fig. 4C.

As clear from the side view of Fig. 3, the position of the center of gravity G is closer to the pivot axes L1 and L2 than those of the other center of gravities G1, G2 and G0. This demonstrates that the load on the worker for the turning is minimized when the mounting position of the battery 15 is disposed in front of the housing 14, that is, disposed between the motor and the operating handle 13 above the operating rod 11.

As described above, even when the mown grass is piled on the reciprocating cutting blade apparatus 1 mounted to the operating rod 11 to form a T-shape, the working machine 10 according to the embodiment of the invention is turned around the fulcrum which is one of the left and right ends P1 and P2 of the reciprocating cutting blade apparatus 1 with a relatively light load for the turning to raise the reciprocating cutting blade apparatus 1. Therefore, it is possible to throw out the piled grass to the side. By this means, it is possible to readily remove the stack of grass on the reciprocating cutting blade apparatus 1 during the work, and therefore to continue the work with free from the stack of grass. Consequently, it is possible to continue the brush cutting without deteriorating the workability and reducing the accuracy of the work.

### Reference Signs List

1: reciprocating cutting blade apparatus,
2: reciprocating cutting blade, 3: support member,
4: transmission case, 43: operating rod mount,
43A: angle adjustment mechanism,
10: handheld working machine, 11: operating rod,
12: drive unit,
13: operating handle,
14: housing, 14A: rear handle, 14B: operating switch,
15: battery,
G, G0, G1, G2: center of gravity
L1, L2: pivot axis

## Claims

1. A handheld working machine (10) with reciprocating cutting blades comprising:
an operating rod (11);
a reciprocating cutting blade apparatus (1) mounted to a top end of the operating rod (11) to form a T-shape;
an operating handle (13) provided in a base end side of the operating rod (11) and including a grip (13A) above the operating rod (11); and
a drive unit (12) provided at the base end of the operating rod (11) and configured to drive the reciprocating cutting blade apparatus (1) via a drive shaft in the operating rod (11),
the drive unit (12) including:
a motor disposed approximately coaxially with the operating rod (11); and
a battery (15) configured to supply electric power to the motor,
**characterized in that**
the battery (15) is detachable from the handheld working machine (10),
wherein a center of gravity (G, G1, G2) of the handheld working machine (10) with the battery (15) attached is nearer to pivot axes (L1, L2) than a center of gravity (G0) of the handheld working machine (10) when the battery (15) is detached, said pivot axes (L1, L2) for turning the handheld working machine (10) when a worker holds the operating handle (13) to turn the handheld working machine (10) around a fulcrum which is one of the left or right end (P1, P2) of the reciprocating cutting blade apparatus (1) to raise the reciprocating cutting blade apparatus (1).

2. The handheld working machine (10) with reciprocating cutting blades according to claim 1, wherein the battery (15) is disposed between the motor and the operating handle (13) above the operating rod (11).

3. The handheld working machine (10) with reciprocating cutting blades (according to one of claims 1 and 2, wherein a rear handle (14A) including an operation switch (14B) configured to turn on and off the reciprocating cutting blade apparatus (1) is disposed above the motor of the drive unit (12).

4. The handheld working machine (10) with reciprocating cutting blades according to one of claims 1 to 3, wherein the battery (15) is externally attached to the housing (14) accommodating the motor.

## Patentansprüche

1. Handgehaltene Arbeitsmaschine (10) mit hin- und hergehenden Schneideklingen, umfassend:
eine Betätigungsstange (11);
eine hin- und hergehende Schneideklingen-Vorrichtung (1), die an einem oberen Ende der Betätigungsstange (11) angebracht ist, um eine T-Form zu bilden;
einen Betätigungsgriff (13), der an einer Basisendseite der Betätigungsstange (11) vorgesehen ist und einen Griff (13A) über der Betätigungsstange (11) aufweist; und
eine Antriebseinheit (12), die an dem Basisende der Betätigungsstange (11) vorgesehen ist und konfiguriert ist, um die hin- und hergehende Schneideklingen-Vorrichtung (1) über eine Antriebswelle in der Betätigungsstange (11) anzutreiben,
wobei die Antriebseinheit (12) aufweist:
einen Motor, der ungefähr koaxial mit der Betätigungsstange (11) angeordnet ist; und
einen Akkumulator (15), der konfiguriert ist, um dem Motor elektrische Energie zuzuführen,
**dadurch gekennzeichnet, dass**
der Akkumulator (15) von der handgehaltenen Arbeitsmaschine (10) abnehmbar ist,
wobei ein Schwerpunkt (G, G1, G2) der handgehaltenen Arbeitsmaschine (10) mit dem daran angebrachten Akkumulator (15) näher an Schwenkachsen (L1, L2) liegt als ein Schwerpunkt (G0) der handgehaltenen Arbeitsmaschine (10), wenn der Akkumulator (15) abgenommen ist, wobei die Schwenkachsen (L1, L2) zum Drehen der handgehaltenen Arbeitsmaschine (10) dienen, wenn ein Arbeiter den Betätigungsgriff (13) hält, um die handgehaltene Arbeitsmaschine (10) um einen Drehpunkt zu drehen, der entweder das linke oder das rechte Ende (P1, P2) der hin- und hergehenden Schneideklingen-Vorrichtung (1) ist, um die hin- und hergehende Schneideklingen-Vorrichtung (1) anzuheben.

2. Handgehaltene Arbeitsmaschine (10) mit hin- und hergehenden Schneideklingen nach Anspruch 1, wobei der Akkumulator (15) zwischen dem Motor und dem Betätigungsgriff (13) über der Betätigungsstange (11) angeordnet ist.

3. Handgehaltene Arbeitsmaschine (10) mit hin- und hergehenden Schneideklingen nach einem der Ansprüche 1 und 2, wobei ein hinterer Griff (14A), der einen Betätigungsschalter (14B) aufweist, der konfiguriert ist, um die hin- und hergehende Schneideklingen-Vorrichtung (1) ein- und auszuschalten, über dem Motor der Antriebseinheit (12) angeordnet ist.

4. Handgehaltene Arbeitsmaschine (10) mit hin- und hergehenden Schneideklingen nach einem der Ansprüche 1 bis 3, wobei der Akkumulator (15) außen an dem Gehäuse (14) angebracht ist, das den Motor aufnimmt.

## Revendications

1. Machine de travail portative (10) avec des lames de coupe à mouvement alternatif comprenant :
une tige d'actionnement (11) ;
un appareil à lames de coupe à mouvement alternatif (1) monté sur une extrémité supérieure de la tige d'actionnement (11) pour former une forme de T ;
une poignée d'actionnement (13) prévue dans un côté d'extrémité de base de la tige d'actionnement (11) et comprenant une poignée (13A) au-dessus de la tige d'actionnement (11) ; et
une unité d'entraînement (12) prévue au niveau de l'extrémité de base de la tige d'actionnement (11) et configurée pour entraîner l'appareil à lames de coupe à mouvement alternatif (1) via un arbre d'entraînement dans la tige d'actionnement (11),
l'unité d'entraînement (12) comprenant :
un moteur disposé approximativement coaxialement avec la tige d'actionnement (11) ; et
une batterie (15) configurée pour fournir de l'énergie électrique au moteur,
**caractérisé en ce que**
la batterie (15) peut être détachée de la machine de travail portative (10),
dans laquelle un centre de gravité (G, G1, G2) de la machine de travail portative (10) avec la batterie (15) attachée est plus proche des axes de pivotement (L1, L2) qu'un centre de gravité (G0) de la machine de travail portative (10) lorsque la batterie (15) est détachée, lesdits axes de pivotement (L1, L2) permettant de faire tourner la machine de travail portative (10) lorsqu'un opérateur maintient la poignée d'actionnement (13) pour faire tourner la machine de travail portative (10) autour d'un point d'appui qui est l'une de l'extrémité gauche ou droite (P1, P2) de l'appareil à lames de coupe à mouvement alternatif (1) pour lever l'appareil à lames de coupe à mouvement alternatif (1).

2. Machine de travail portative (10) avec des lames de coupe à mouvement alternatif selon la revendication 1, dans laquelle la batterie (15) est disposée entre le moteur et la poignée d'actionnement (13) au-dessus de la tige d'actionnement (11).

3. Machine de travail portative (10) avec des lames de coupe à mouvement alternatif selon l'une des revendications 1 et 2, dans laquelle une poignée arrière (14A) comprenant un commutateur d'actionnement (14B) configuré pour activer et désactiver l'appareil à lames de coupe à mouvement alternatif (1) est disposée au-dessus du moteur de l'unité d'entraînement (12).

4. Machine de travail portative (10) avec des lames de coupe à mouvement alternatif selon l'une des revendications 1 à 3, dans laquelle la batterie (15) est attachée de manière externe au boîtier (14) logeant le moteur.
